# EUROPEAN PATENT SPECIFICATION

(11) **EP 0 842 749 B1**
(45) Date of publication and mention of the grant of the patent: **10.04.2002**
(21) Application number: 97309123.4
(22) Date of filing: 13.11.1997
(51) Int. Cl.: B29C 33/10, B29D 30/06

(54) **Mould vents**
Entlüftungskanäle für Formwerkzeuge
Events pour moules

(30) Priority: 15.11.1996 GB 9623770
(43) Date of publication of application: 20.05.1998
(73) Proprietor: DUNLOP TYRES LTD, Erdington, Birmingham B24 9QT (GB)
(72) Inventor: Green, Thomas Benjamin, Marston Green, Birmingham B37 7BE (GB)
(74) Representative: Stewart, Charles Geoffrey

(56) References cited:
- EP-A- 0 311 550
- DE-A- 2 302 906
- GB-A- 922 788
- US-A- 2 290 510
- US-A- 2 865 052
- US-A- 4 351 789
- PATENT ABSTRACTS OF JAPAN vol. 009, no. 164 (M-395), 10 July 1985 & JP 60 040218 A (MAASU:KK), 2 March 1985,

## Description

The present invention relates to vents for moulds used in forming vulcanisable rubber or other such mouldable materials and particularly but not exclusively to vents for tyre moulds.

In the moulding of rubber articles such as tyres, the initial heating of the tyre surface in contact with the hot mould reduces the viscosity of the surface rubber so that under the influence of internal moulding pressure local rubber flow occurs. Venting is required to allow pockets of air which may become trapped between the green tyre carcass and the hot mould surface to escape so that every part of the curing tyre surface contacts the mould and the tyre is thus vulcanised with a perfect impression of the mould detail.

Tyre mould vents commonly take the form of small diameter holes drilled through the mould wall normal to the interior surface. Most commonly modern venting utilises so-called 'insert vents' which are small bore tubes introduced through the mould wall. Once any trapped air has vented through the hole rubber begins to flow through the vent. However the small diameter of the hole ensures that the rubber cures rapidly thus plugging the vent hole and sealing the mould. After completion of the tyre curing process these plugs of rubber which are still attached to the tyre surface are pulled out of the vent holes when the tyre is demoulded.

Such plugs of rubber or, 'spue-pips' as they are commonly known, detract from the visual appeal of the moulded tyre and are usually removed by trimming. This trimming operation is time consuming and thus adds to the cost of producing the tyre.

Also a problem may occur when the cured spue-pip breaks off when the tyre is being demoulded and thus remains blocking the vent hole. Such a blocked vent may not be immediately apparent and can cause subsequent poor quality mouldings.

To solve the above-mentioned problems so-called "spueless vents" have been proposed, which allow trapped air to escape but which close to prevent rubber flow.

US 4 492 554 and US 4,347 212 disclose examples of such 'spueless' vents. These known vents comprise a valve held normally open by a coil spring to allow the passage of air. The valve is closed by flowing rubber which moves a valve head portion against the spring tension into seated engagement with a valve seat. However these vents comprise an assembly of at least four separate components and are thus relatively complicated and expensive and as such have not found wide utility.

Other prior art, for example Japanese JP-A-60-040218 discloses the use of resilient spring legs to provide a retention for a valve body pressed in to a mould to give a replaceable valve assembly. In this valve the small air passages are provided by slits across the central region of the valve body.

Thus in the prior art valves are complicated and therefore expensive to manufacture or provide permanent apertures which inevitably become blocked by rubber or the like being moulded.

Accordingly it is an object of the present invention to provide a spueless vent which is simple in construction and therefore less expensive.

According to the present invention an insert vent for a mould is provided having the features of Claim 1. means and spring opening means. The vent is preferably formed of a mouldable plastics material.

Further aspects of the present invention will become apparent from the following description of embodiments of the invention in conjunction with the following schematic drawings in which:
Figures 1A-1C show an insert vent according to the invention;
Figure 2 shows in cross-section a bottom half of a tyre mould with the insert vent positioned in the mid-sidewall region; and
Figures 3A-3D show further embodiments of the invention.

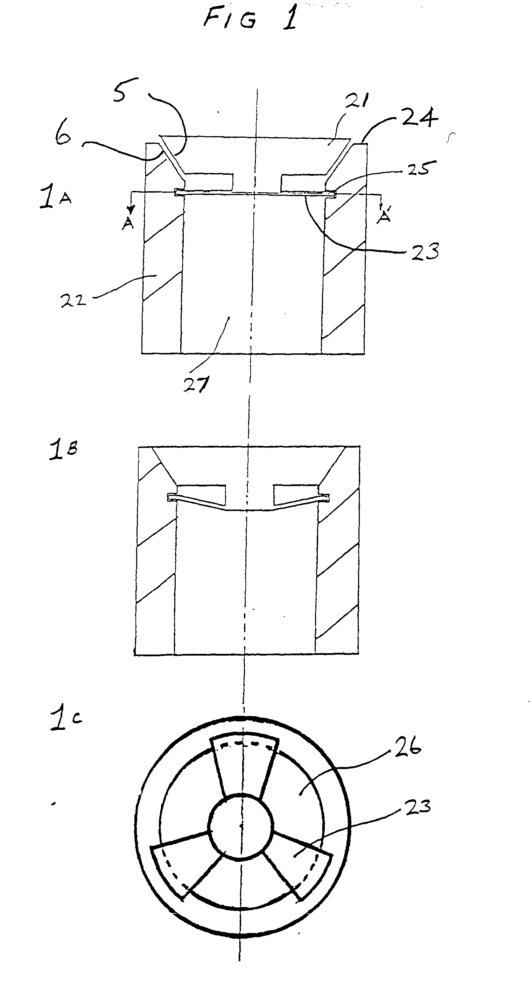

Figure 1 shows in 1C and in 1A and 1B respectively plan and sectional side elevation views of an insert vent according to the present invention which is formed from a glass reinforced Polyphenylene Sulphide material.

The vent comprises a hollow right cylindrical main body 22 having an upper end face 24 for fitting flush with the interior surface of the mould and a hole 27 through the centre of the main body 22 connecting the upper end face and the bottom end face to provide a pathway from the interior of the mould to atmosphere. Disposed at the upper end face 24 is a valve closure member 21, shown in an open position, which is a short truncated conical shape having a conical valve closure surface 5 which is a complementary profile to a conical valve seating surface 6 formed on the interior surface of the upper end face. Thus in the closed position, the conical valve closure surface 5 of the closure member 21 fits in a form match manner with the valve seating surface 6 of the vent main body to provide a seal.

In the open position the vent allows air trapped in the mould to escape via the central hole 27 of the vent to atmosphere. After the trapped air has gone the rubber of the tyre being expanded into the mould impinges on the valve closure member 21 and forces the valve closure surface 5 into seating engagement with the valve seating surface 6. Thus the vent is sealed against the flow of rubber out of the mould. On completion of the moulding curing operation the tyre is removed from the mould at which time the valve closure member 21 is moved out of engagement with the valve seating surface 6 and thus the vent is opened ready for the next moulding operation.

With regard to size, in this embodiment the outside diameter OD of the cylindrical main body 22 of the vent is 3mm and its length is 10mm. The diameter ID of the cylindrical interior passage 27 is 0.75mm and the gap G of the maximum separation of the closure member 21 and the upper end face 24 is 0.5mm.

The great advantage of the above-described vent is that it may be moulded in a single operation and thus is relatively simple and inexpensive to manufacture.

Apart from plastics the vent may be formed in any suitable engineering material having the necessary mechanical properties and stability over the required working temperature range of up to 200°C. The necessary spring force provided by the spring hinge or means is obtained by the combination of elasticity of the material and design dimensions. Suitable materials include metals and engineering plastics such as thermoplastic and thermosetting materials including filled materials.

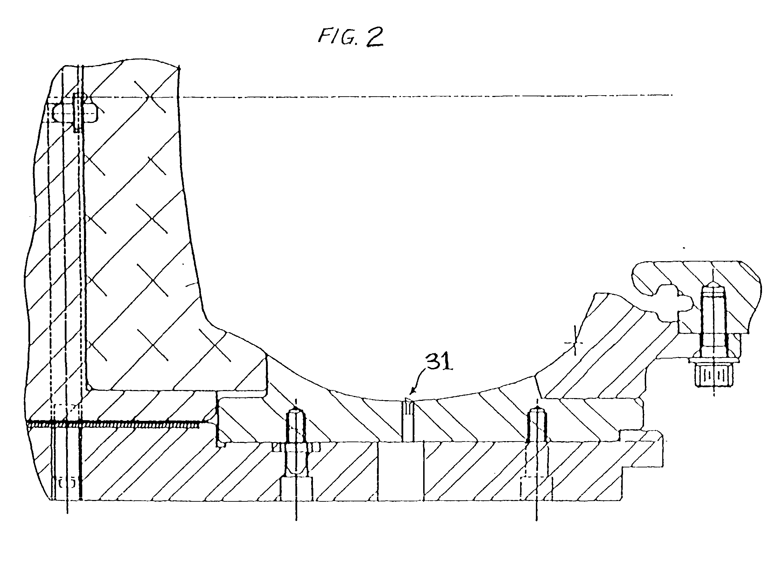

Figure 2 shows the vent 31 of Figure 1 inserted into the mid-sidewall region of a tyre mould.

The spring opening means for opening the valve closure member 21 takes the form of integral spring legs 23. As shown in sectional diagram 1A of the vent in the open position these legs 23 are located in an internal groove 25 or grooves provided in the wall of the interior hole 27 in the vent main body 22. Figure 1C is a view taken in the plane A-A' of Figure 1A and shows three such spring legs 23 equi-spaced within the interior of the main body 22 and spaced apart to provide passages 26 for the flow of air from the mould. As can be seen in Figure 1B the spring legs 23 deform when rubber presses on the valve closure member 21 to seal the valve. On removal of the cured tyre from the mould the spring legs 23 recover and push the valve closure member 21 outward thus opening the vent.

The spring legs 23 are shown and described as located in internal grooves 25 on the internal wall of the vent main body 22.

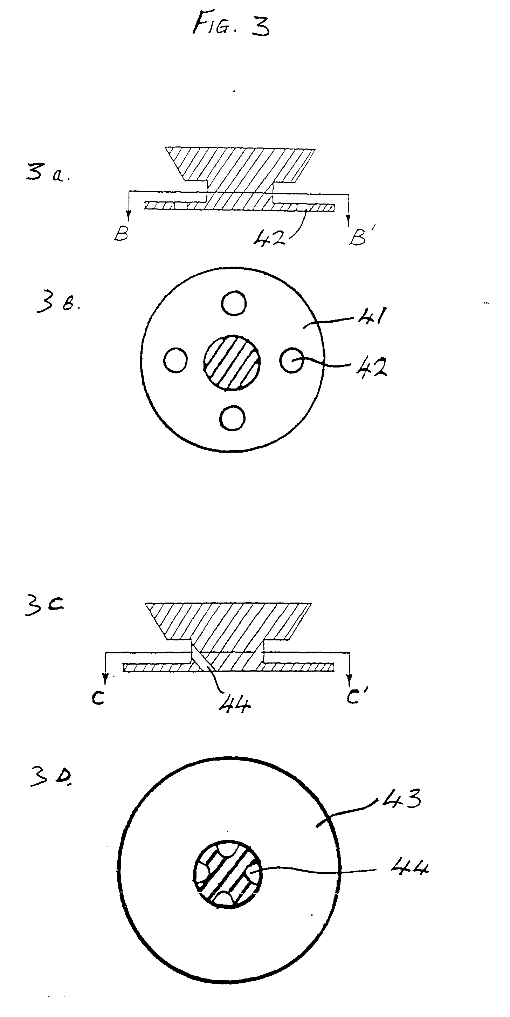

In alternative embodiments the spring legs may be replaced by a complete spring disc 41,43 as shown in Figure 3. In this case holes 42,44 are provided either through the disc itself or through the closing member body as shown in Figures 3B and 3D which show sectional views taken in planes B-B' and C-C' of the closing members of Figures 3A and 3C respectively.

## Claims

1. An insert vent (31) for a mould comprising a main body (22) having an interior passage (27) formed there through and a selectively movable valve closure member (21) constructed and arranged to selectively close off said interior passage (27), said valve closure member (21) includes at least one projecting spring leg (23) integral with the valve closure member (21) and extending laterally therefrom, **characterized in that** said at least one projecting spring leg (23) being fixed to a portion of said main body (22) and being resiliently biased so as to resiliently maintain said valve closure member (21) in a position away from the interior passage (27) so as to leave said interior passage (27) open, and to close said interior passage (27) when pressure is applied on the interior mould surface.

## Patentansprüche

1. Entlüftungs-Einsatz (31) für eine Form, die ein Hauptgehäuse (22) mit einem dadurch ausgebildeten Innenkanal (27) und ein selektiv bewegbares, zum selektiven Verschließen des Innenkanals (27) aufgebautes und ausgelegtes Ventilverschlussteil (21) aufweist, welches Ventilverschlussteil (21) mindestens einen vorstehenden mit dem Ventilverschlussteil (21) integralen und in Querrichtung davon abstehenden Federschenkel (23) aufweist, **dadurch gekennzeichnet, dass** der mindestens eine vorstehende Federschenkel (23) an einem Abschnitt des Hauptgehäuses (22) befestigt und federnd so vorgespannt ist, dass er das Ventilverschlussteil (21) in einer von dem Innenkanal (27) abgelegenen Position federnd hält und so den Innenkanal (27) offen hält, und den Innenkanal (27) schließt, wenn an die innere Formfläche Druck angelegt wird.

## Revendications

1. Organe rapporté (31) de ventilation destiné à un moule, comprenant un corps principal (22) ayant un passage intérieur (27) formé dans le corps et un organe obturateur (21) mobile sélectivement dont la construction et la disposition permettent la fermeture et l'ouverture sélectives du passage intérieur (27), l'organe obturateur (21) comprenant au moins une branche élastique en saillie (23) solidaire de l'organe obturateur (21) et dépassant latéralement de celui-ci, **caractérisé en ce que** la branche élastique en saillie au moins (23) est fixée à une partie du corps principal (22) et est rappelée élastiquement afin qu'elle maintienne élastiquement l'organe obturateur (21) en position distante du passage intérieur (27) et laisse ainsi le passage intérieur (27) ouvert, et ferme le passage intérieur (2,7) lorsqu'une pression est appliquée à la surface interne du moule.
